# EUROPEAN PATENT SPECIFICATION

(11) **EP 1 130 588 B1**
(45) Date of publication and mention of the grant of the patent: **04.10.2006**
(21) Application number: 01300995.6
(22) Date of filing: 05.02.2001
(51) Int. Cl.: G11B 7/28, G11B 19/04, G11B 20/10, G11B 20/18, G11B 27/36

(54) **Data transfer with abnormality control**
Datenübetragung mit Anormalitätskontrolle
Transmission de données avec contrôle d'anomalies

(30) Priority: 29.02.2000 JP 2000053833
(43) Date of publication of application: 05.09.2001
(73) Proprietor: Pioneer Corporation, Meguro-ku, Tokyo (JP)
(72) Inventor: Abe, Hiroyuki, c/o Pioneer Corporation, Oaza Yamada, Kawagoe-shi, Saitama (JP)
(74) Representative: Haley, Stephen

(56) References cited:
- EP-A- 1 168 316
- DE-A- 4 216 593
- PATENT ABSTRACTS OF JAPAN vol. 014, no. 061 (P-1001), 5 February 1990 (1990-02-05) & JP 01 285063 A (PIONEER ELECTRON CORP), 16 November 1989 (1989-11-16)
- PATENT ABSTRACTS OF JAPAN vol. 1995, no. 02, 31 March 1995 (1995-03-31) & JP 06 309775 A (SHARP CORP), 4 November 1994 (1994-11-04)

## Description

The present invention relates to a signal processing system having a function to copy information recorded in, for example, an information recording medium.

A variety of information recording media for recording information in a digital form have been developed, including a compact disk (CD), digital video disk or digital versatile disk (DVD), mini disk (MD), magneto-optical disk (MO disk) and digital audio tape (DAT). Using these information recording media, various contents such as music are being provided.

Not only information recording media for read-only purpose but also media capable of writing information have been developed. For example, in addition to the MD, MO, DAT and digital video tape, write-once type and rewritable type CDs and DVDs and hard disk drives (HDDs) capable of storing a large volume of data have been developed.

With a wide range of information recording media and contents available, users now can copy a desire content stored in one information recording medium to another to an extent that does not infringe the copyright of the material being copied. For example, in an audio system having a CD playback unit and an MD recording unit, the user can play a music CD and at the same time copy the music being played into an MD.

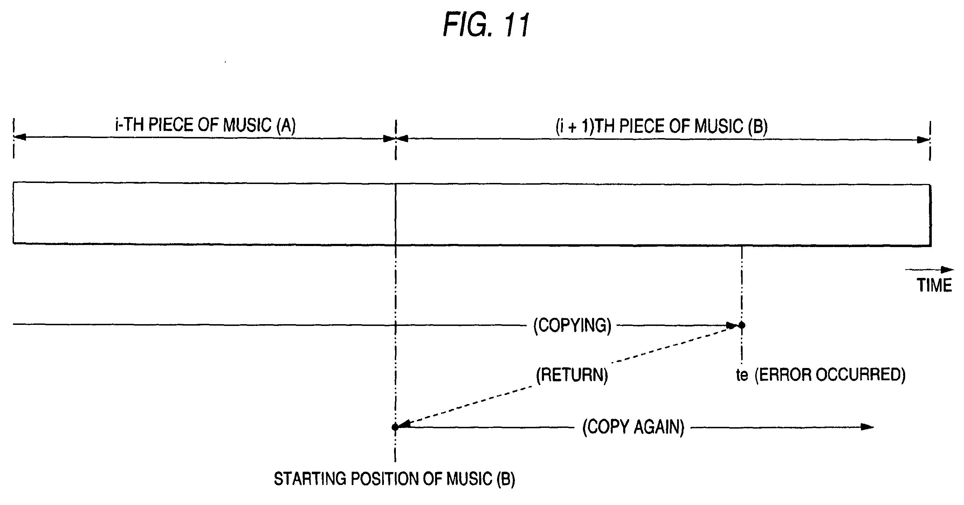

In conventional audio systems, when an error occurs while music is copied from a CD to an MD, the music being copied is copied again from the beginning. Consider an example case in which an i-th music (A) has been copied normally but an error occurs at a point in time te while the next (i+1)st music (B) is copied as shown in Fig. 11. In this case, it is conventional practice to return to the beginning of the music (B) and start over.

This however takes many hours to complete the copying. Particularly when long music such as classic music has to be copied from the start, the operability is degraded considerably.

DE-A-4216593 discloses a signal processing system in accordance with the preamble of claim 1, in which a data file having a plurality of data blocks each of a predetermined and equal data length is transferred from a source to a recorder and recorded in said recorder, said signal processing system comprising: an abnormality detection means arranged to detect, in use, an abnormality while the data file is recorded and to output an abnormality detection signal; and a control means disposed on said recorder and arranged, in use, when the abnormality detection signal is output from the abnormality detection means, to instruct the source to retransfer a data block in the data file which was being read at the time of abnormality detection or a data block which is a predetermined amount before the data block in the data file associated with the abnormality detection and at the same time instruct the recorder to resume the recording, beginning with at least the data block among those retransmitted to the recorder.

JP-A-01285063 discloses a magnetic recording and reproducing system to prevent a recording from taking place under imperfect conditions.

The present invention has been accomplished to overcome the aforementioned conventional drawbacks and provide a signal processing system capable of shortening the copying time by enabling continuous copying despite possible anomalies in the recorder itself.

According to the present invention, there is provided a signal processing system in which a data file having a plurality of data blocks each of a predetermined and equal data length is transferred from a source to a recorder and recorded in said recorder, said signal processing system comprising:
an abnormality detection means arranged to detect, in use, an abnormality while the data file is recorded and to output an abnormality detection signal; and
a control means disposed on said recorder and arranged, in use, when the abnormality detection signal is output from the abnormality detection means, to instruct the source to retransfer a data block in the data file which was being read at the time of abnormality detection or a data block which is a predetermined amount before the data block in the data file associated with the abnormality detection, and at the same time instruct the recorder to resume the recording beginning with at least the data block among those retransmitted to the recorder,
   characterised by:
   said abnormality being in the recorder but not in the source of the recorder; and
   said abnormality detection means being disposed on said recorder.

With the above configuration, when data blocks in a data file are transferred from the source to the recorder and are recorded in the recorder, if an abnormability occurs in the recorder, the abnormality detection means detects the abnormability.

When the abnormability detection means detects an abnormality, the control means instructs the source to retransfer data beginning with the data block that was being recorded at time of detection of abnormality or beginning with a predetermined amount before the data block involving the abnormality. Further, the control means instructs the recorder to resume the recording beginning with that data block among those retransferred to the recorder which involves the abnormality.

This obviates the need for re-recording all the data file, thus reducing the time it takes for the recorder to complete the recording of the data file.

The signal processing system may also comprise a data adding means provided in the source which adds, in use, address information to each data block and transfers the data blocks to said recorder, and an address determination means which determines, in use, according to the address information, when the abnormality detection signal is output from said abnormality detection means, an address of the data block in the data file which was being read at the time of the abnormality detection, wherein the control means is arranged, in use, to instruct said source to retransfer data beginning with the address determined by said address determination means or an address a predetermined amount before the address determined by said address determination means and at the same time instruct the recorder to resume the recording beginning with at least the data block among those retransmitted to the recorder in which the abnormality occurred.

With this configuration, the data adding means on the source side adds address information to each data block and transfers it to the recorder. An abnormal condition occurs in the recorder while the recorder records the data block, the abnormality detection means detects the abnormality and the address determination means determines, based on the address information, an address of the data block which was being read at time of abnormality detection. Then the control means instructs the source to retransfer data beginning with the address determined by the address determination means or an address a predetermined amount before the address determination means and at the same time instructs the recorder to resume the recording beginning with at least that data block among those retransmitted to the recorder in which the abnormality occurred.

Because not all the data file is re-recorded, the time taken by the recorder to complete the recording of the data file can be reduced.

The data adding means may also add flag information indicating whether the data block is normal or abnormal, in use, to the data block and then transfer the data blocks to the recorder. In this case, the address determination means decides, in use, whether the data block is normal or abnormal according to the flag information, and when the data block is decided to be abnormal, detects an address of the abnormal data block according to the address information (ADR).

With this configuration, the data adding means on the source side adds to each data block address information and flag information indicating whether the data block is normal or abnormal and transfers it to the recorder. If some anomaly occurs in the recorder while the recorder is recording data blocks, the abnormality detection means outputs an abnormally detection signal.

When the abnormality detection signal is output, the address determination means determines, based on the address information, an address of the data block which was being read at time of abnormality detection. The address determination means checks whether the data block is normal or abnormal according to the flag information and, when the data block is found abnormal, determines the address of the abnormal data block according to the address information.

Then the control means instructs the source to retransfer data beginning with the address determined by the address determination means or an address a predetermined amount before the address determined by the address determination means and at the same time instructs the recorder to resume the recording beginning with at least that data block among those retransmitted to the recorder in which the abnormality occurred.

Because not all the data file is re-recorded, the time taken by the recorder to complete the recording of the data file can be reduced. Further, not only when the abnormality detection means detects an abnormality but also when an abnormal data block is transferred from the source to the recorder, is the source instructed to retransfer the data blocks for writing into the recorder. This enables the data to be reliably recorded into the recorder.

The abnormality detection means used in the above configuration includes at least a voltage sensor for detecting an abnormal condition in the supply voltage to the recorder and a vibration sensor for detecting vibrations of the recorder.

With the above configuration, when voltage fluctuations or vibrations detrimental to the recording of data into the recorder should occur, the data recording is performed again beginning with the data block which was being written when the abnormality occurred or beginning with a data block a predetermined amount before the faulty data block. This arrangement allows the signal processing system, when it is mounted on a vehicle such as automobile, to be tolerant of voltage variations of a battery and of vibrations and impacts .

In the Drawings;
Fig. 1 is a block diagram showing a configuration of the car-mounted audio system of this embodiment.
Figs . 2A to 2D are waveform diagrams explaining how an abnormality in the supply voltage is detected.
Fig. 3 is an explanatory diagram showing a format of CD data and a copy operation.
Fig. 4 is an explanatory diagram showing a format of CD data and a conventional copy operation.
Fig. 5 is an explanatory diagram explaining subcode data.
Fig. 6 is an explanatory diagram showing a format of Q-channel data.
Fig. 7 is an explanatory diagram showing an interface format.
Fig. 8 is an explanatory diagram showing a sector structure of a hard disc.
Fig. 9 is a flow chart showing a sequence of steps for a copy operation.
Fig. 10 is a flow chart showing a further sequence of steps for the copy operation.
Fig. 11 is an explanatory diagram showing a problem with the conventional copying method.

Embodiments of the signal processing system of this invention will be described by referring to Figs . 1 to 10. The following explanation takes up a car-mounted audio system which has a reproducing device or player, such as CD, MD and DVD players, as sources and a recorder 5 with a hard disc drive HDD that records information from the source onto a hard disc DISC.

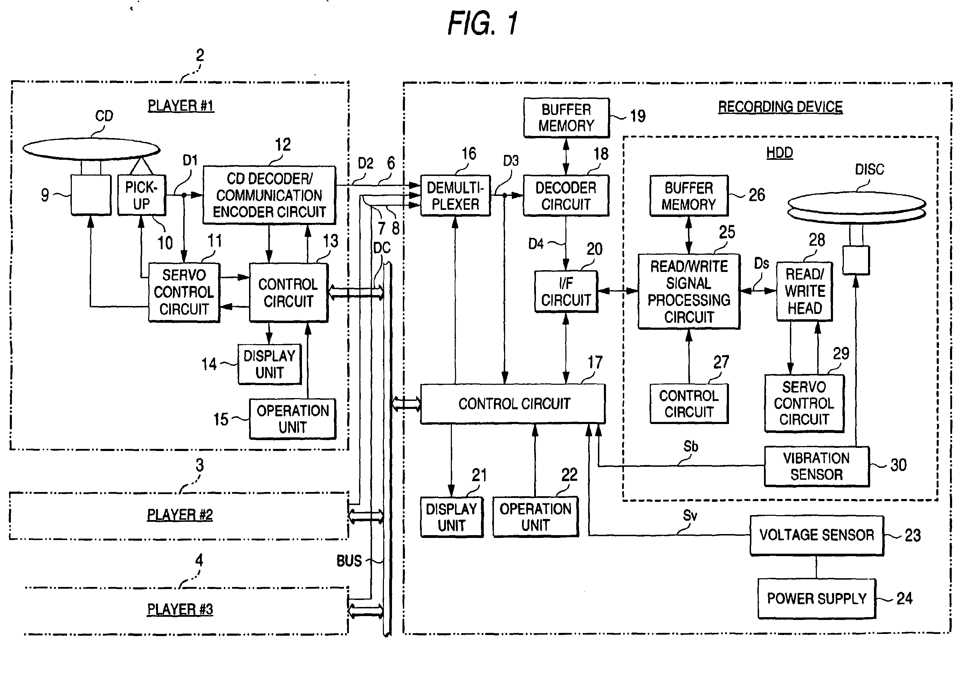

Fig. 1 is a block diagram showing the configuration of the car-mounted audio system 1 of one embodiment.

In Fig. 1, the car-mounted audio system 1 includes the recorder 5 equipped with a hard disc drive HDD and one or more players 2, 3, 4 connected to the recorder 5. That is, the user can selectively install a modular CD player, an MD player or a DVD player in the car-mounted audio system 1.

In more concrete terms, the car-mounted audio system 1 has a control bus BUS, which is connected with the players 2, 3, 4. The players 2, 3, 4 are also connected with the recorder 5 via data transmission cables 6, 7, 8, thus forming the car-mounted audio system 1 in which the recorder 5 is connected with one or more players 2, 3, 4. Fig. 1 represents a case where the CD player is connected as a first player 2 and the MD player and DVD player as second and third players 3, 4.

The player (CD player) 2 has a spindle motor 9, which rotates a compact disk (CD), an information recording medium, while holding it at a clamp position, a pickup 10 to optically detects data recorded in the CD, and a servo control circuit 11 that servo-controls the spindle motor 9 and the pickup 10 according to the detected data D1 output from the pickup 10.

The player 2 also has a CD decoder/communication encoder circuit 12, a control circuit 13, a display unit 14, and an operation unit 15.

The CD decoder/communication encoder circuit 12 decodes the detected data D1 from the pickup 10 according to the CD format and then encodes the decoded data into transmission data D2 before sending it to the recorder 5 side through a data transfer cable 6.

In generating the transmission data D2 from the detected data D1, the CD decoder/communication encoder circuit 12 adds to the transmission data D2 an address data ADR representing an address in the compact disk where the detected data D1 is stored and a flag data V indicating whether the detected data D1 is normal or abnormal. This is detailed later.

That is, the CD decoder/communication encoder circuit 12 performs a bit error correction on the detected data D1. The control circuit 13 detects when the error correction has successfully been done and then adds the flag data V (=0) indicating that the data is normal and the address data ADR to the detected data D1, which is then encoded by the CD decoder/communication encoder circuit 12 to generate the transmission data D2 to be sent to the recorder side.

When on the other hand the error correction fails to be executed after repetitively attempting the bit error correction a predetermined number Xm (described later) of times, this is detected by the control circuit 13 which then adds flag data V (=1) indicating that the data is abnormal and the address data ADR to the detected data D1, which is encoded by the CD decoder/communication encoder circuit 12 to generate the transmission data D2 to be sent to the recorder side.

The control circuit 13 has a microprocessor (MPU) which checks whether the bit error correction can be done or not and centrally controls the overall operation of the player 2. Further, the control circuit 13 is connected via the control bus BUS to a control circuit 17 in the recorder 5, so that the control circuit 13 and the control circuit 17 cooperate to control the copy process for recording the information (data) from the player 2 (as a source) onto the recorder 5.

The display unit 14 is provided on the operation panel of the modular player 2 and displays to the user the operating condition of the player 2 and the name of music in the CD being played.

The operation unit 15 is also provided on the operation panel of the modular player 2 and has a plurality of switches for the user to issue commands, such as starting the playing of a CD, ending it, temporarily stopping it and selecting music.

The recorder 5 includes, in addition to the hard disc drive HDD, a demultiplexer circuit 16 connected with the data transfer cables 6, 7, 8 from the players 2, 3, 4, a control circuit 17, a decoder circuit 18, a buffer memory 19, an interface circuit (I/F circuit) 20, a display unit 21, an operation unit 22, a power supply 23, and a voltage sensor 24.

The control circuit 17 has a microprocessor (MPU) which centrally controls the overall operation of the recorder 5 and transfers control data Dc to and from the players 2, 3, 4.

The control circuit 17 controls the demultiplexer circuit 16 to send various data supplied from the players 2, 3, 4 through the data transfer cables 6, 7, 8 to the decoder circuit 18 by protecting these data against interference with one another. In detail, the control circuit 17 controls the demultiplexer circuit 16 so as to transfer the data D2 as selected data D3 to the decoder circuit 18 while the data D2 is supplied to the recorder 5 from the CD player as the player 2.

The decoder circuit 18 decodes the data D3 received and transfers the decoded data D4 to the control circuit 17 and the hard disc drive HDD through the interface circuit 20.

That is, when the data D2, which was encoded by the CD decoder/communication encoder circuit 12 in the player 2, is supplied as the data D3 to the decoder circuit 18, the decoder circuit 18 performs the decoding, which is reverse to the encoding done by the CD decoder/communication encoder circuit 12, on the data D3 to generate data D4 compatible with the CD format and then outputs decoded data D4.

The buffer memory 19 is provided to temporarily store the data D3 and D4 when the decoder circuit 18 performs the decoding and to adjust the timings of the data D3 and D4.

Further, the control circuit 17 checks for any anomaly as detailed later and, when an anomaly occurs, requests the control circuit 13 on the player 2 side through the control data Dc to retransmit the data.

The display unit 21 is provided on the operation panel of the car-mounted audio system 1 and shows the operating state of the recorder 5.

The operation unit 22, too, is provided on the operation panel of the car-mounted audio system 1 and has a plurality of switches for the user to issue commands such as starting the recording, ending it and temporarily stopping it.

The power supply 24 supplies the recorder 5 and the hard disc drive HDD, and the voltage sensor 23 detects the supply voltage output from the power supply 24 and sends a detection signal Sv to the control circuit 17.

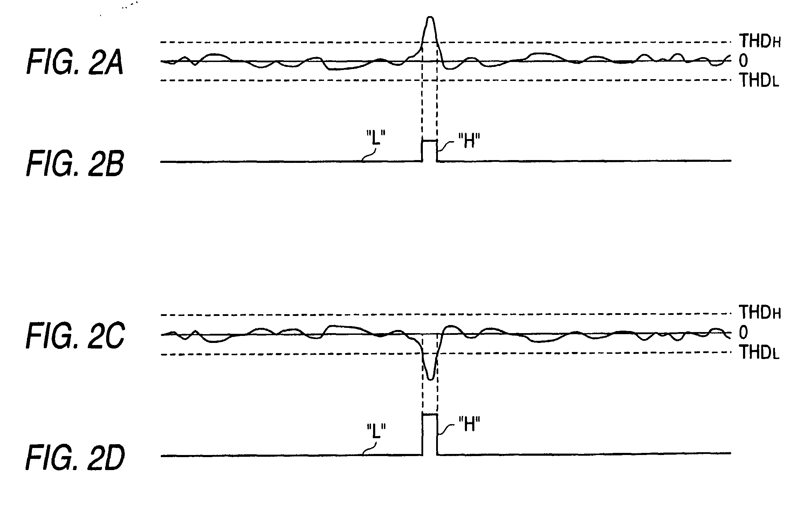

That is, when the detection signal Sv detected by the voltage sensor 23 changes as shown in Fig. 2A, a comparator (not shown) in the control circuit 17 compares the amplitude change of the AC component of the detection signal Sv with predetermined threshold values THD_{H}, THD_{L} (=-THD_{H}). The comparator generates a binary signal which, as shown in Fig. 2B, is logically "low" when the amplitude change of the AC component of the detection signal Sv is within a predetermined allowable range set by the threshold values THD_{H}, THD_{L} and is logically "high" when the amplitude change is outside the allowable range. The control circuit 17 decides that an abnormality has occurred when the binary signal is logically "high".

When it decides that an anomaly has occurred with the supply voltage, the control circuit 17 puts into the control data Dc the address data ADR corresponding to the time at which the supply voltage anomaly occurred, sends the control data Dc to the control circuit 13 on the player 2 side and requests it to play back and retransmit the block of data recorded on the address ADR.

The threshold values THD_{H}, THD_{L} are determined to set a range in which the recorder 5 and the hard disc drive HDD will not have trouble recording or reproducing data in the event of variations of the supply voltage.

The hard disc drive HDD has a read/write signal processing circuit 25 connected to the interface circuit 20, a buffer memory 26, a control circuit 27, a read/write head 28, a servo control circuit 29, and a hard disc DISC on which data is recorded by the read/write head 28.

The read/write signal processing circuit 25 encodes the data D4 supplied from the interface circuit 20 into sector data Ds conforming to a predetermined format so that the read/write head 28 can record (write) the sector data Ds into sectors logically formed on the hard disc DISC.

The servo control circuit 29 servo-controls the rotation of the hard disc DISC and also the access of the read/write head 28 to the hard disc DISC.

The control circuit 27 causes the read/write signal processing circuit 25 to generate the sector data Ds and controls the servo control circuit 29, thus performing a centralized control for recording the sector data Ds on the sectors of the hard disc DISC.

On the case of the hard disc drive HDD is mounted a vibration sensor 30 that detects vibrations applied from outside to the hard disc drive HDD while the vehicle is traveling. A detection signal Sb output from the vibration sensor 30 is supplied one after another to the control circuit 17.

When the detection signal Sv output from the vibration sensor 30 changes as shown in Fig. 2C, the wind comparator (not shown) in the control circuit 17 compares the amplitude change of AC component of the detection signal Sb with the threshold values THD_{H}, THD_{L} (=-THD_{H}). The wind comparator generates a binary signal which, as shown in Fig. 2D, is logically "low" when the amplitude change of the AC component of the detection signal Sb is within a predetermined range set by the threshold values THD_{H}, THD_{L} and is logically "high" when the amplitude change is outside the allowable range.

When the binary signal is logically "high", the control circuit 17 decides that an impact is applied to the hard disc drive HDD from outside. The control circuit 17 puts into the control data Dc the address ADR of data corresponding to the time when the external impact occurred, sends the control data Dc to the control circuit 13 on the player 2 side and requests it to play back and retransmit the block of data recorded on the address ADR.

The threshold values THD_{H}, THD_{L} are predetermined to define a range in which the read/write head 28 of the hard disc drive HDD can no longer write or read data properly due to so-called tracking errors caused by vibrations.

The car-mounted audio system 1 has a speaker system not shown in Fig. 1, which, when the CD decoder/communication encoder circuit 12 of the player 2 decodes audio data recorded on the music CD, activates speakers according to the decoded audio data.

The recorder 5 not only writes data into a disc by the hard disc drive HDD but also allows the user to request a playback of music through the operation unit 22, which is accomplished by reading audio data from the disc DISC in the hard disc drive HDD by the read/write head 28, decoding the data thus read by the read/write signal processing circuit 25, and then supplying the decoded data through the interface circuit 20 to the speaker system for playing the music.

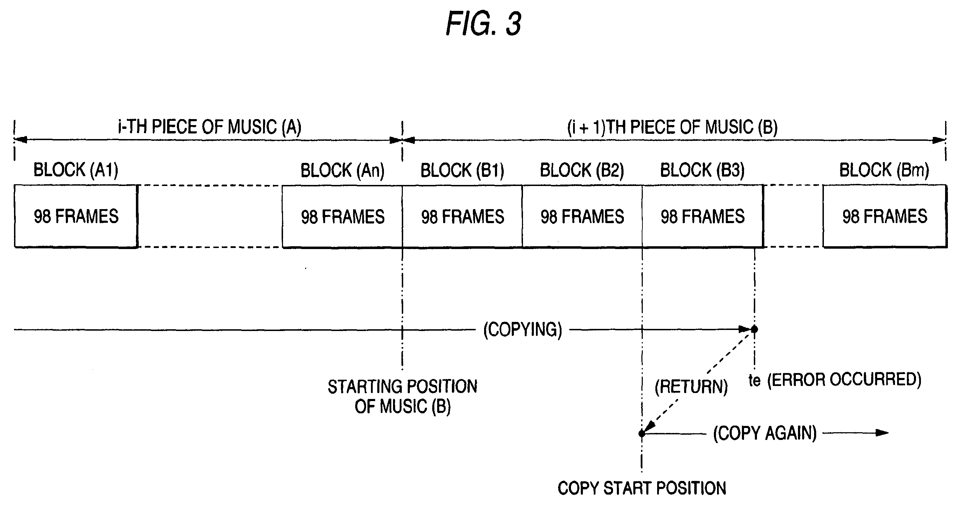

Now, the operation of the car-mounted audio system 1 of the above configuration will be described by referring to Figs. 3 to 10. We take up an example case where the CD player as the player 2 plays a music CD and the audio data reproduced is copied to the hard disc drive HDD of the recorder 5.

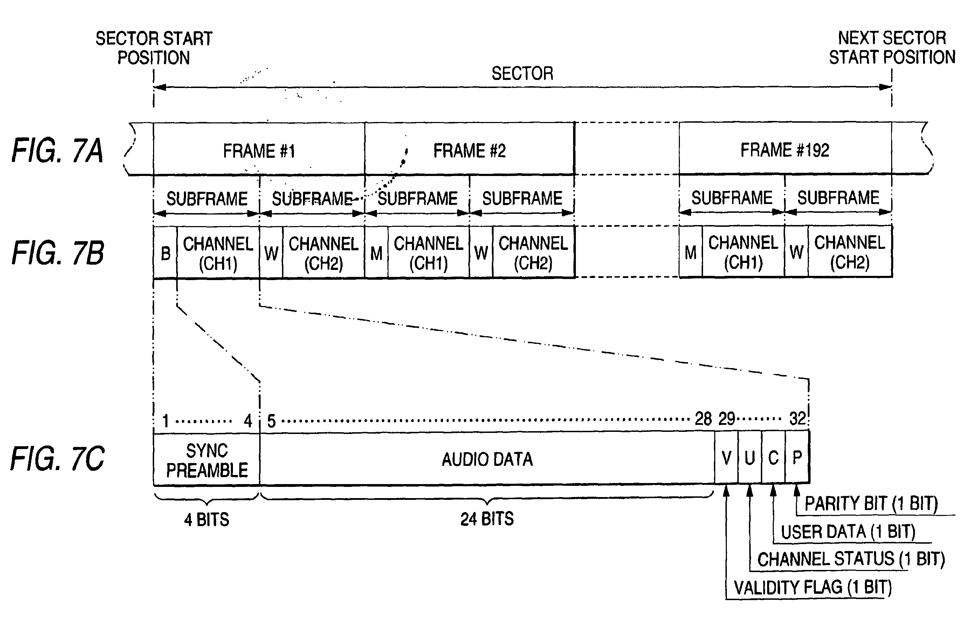

First, the format of the music CD is briefly explained by referring to Figs. 3, 5 and 6, and then the format of the data D2 supplied from the player 2 to the recorder 5 will be explained by referring to Fig. 7.

The music CD, as shown in Fig. 3, is recorded with data in blocks of 98 frames. When two or more pieces of music are recorded in one music CD, the stereo audio data of each piece of music is recorded as a plurality of blocks . Further, each frame has a frame synchronization signal, subcode data, stereo audio data, and parity data for bit error correction.

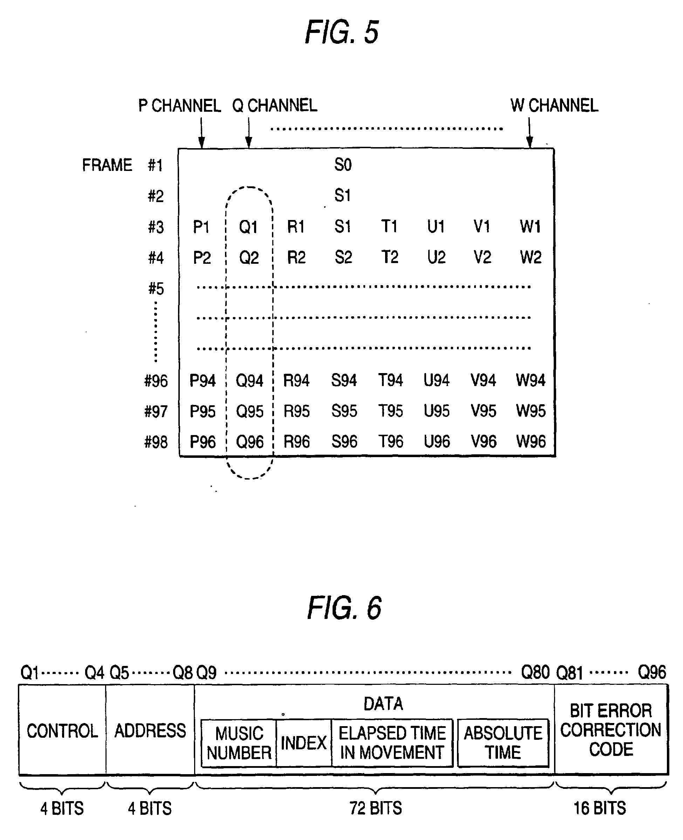

The subcode data is distributed over the 98 frames, 8 bits in each frame, as shown in Fig. 5. To describe in more detail, the first and second frames are recorded with subcode sync data S0, S1, respectively, and the third to 98th frames, 96 frames in total, are each recorded with 8-bit subcode data whose bits are called P, Q, R, S, T, U, V and W bit. That is, a total of 96 bits P1-P96 constitute a P-channel, bits Q1-Q96 a Q-channel. In the same manner R- to W-channel are each made up of 96 bits.

The Q-channel consisting of bits Q1-Q96, as shown in Fig. 6, comprises 4-bit control data, 4-bit address data, 72-bit data representing a movement number, an index, an elapsed time in the movement and an absolute time, and 16-bit code data for bit error detection.

The control data is used to identify the audio channel number and the address data is used to check that the 72-bit data is recorded. Of the 72-bit data, the movement number is used to indicate a music number; the index is used to divide each piece of music into more detailed sections; the elapsed time in the movement indicates the recorded address of each piece of music as the time information for every 98 frames; and the absolute time indicates an absolute recorded address of the first music to the last music as the time information..

The lead-in area of the music CD has a TOC (table of contents) recorded with management data corresponding to the movement number data, the elapsed-time-in-the-movement data, and the absolute time data.

When the player 2 reproduces the audio data of music from the music CD, it reads the management data from the TOC and quickly moves the pickup 10 to a position where the audio data of the music specified by the user exists.

Next, by referring to Fig. 7, the format of the data D2 generated by the CD decoder/communication encoder circuit 12 (hereinafter referred to as an interface format) will be explained.

As shown in Fig. 7A, the data D2 is structured such that 192 frames constitute one sector (or block), and the CD decoder/communication encoder circuit 12 transfers the stereo audio data of each piece of music as a plurality of sectors.

Further, as shown in Fig. 7B, each frame has two subframes, each of which has identifiable synchronization preambles B, W, M made up of 4-bit code data and a channel CH1 having audio data of a left stereo channel and a channel CH2 having audio data of a right stereo channel.

That is, the first subframe in the first frame #1 situated at the head of each sector has a synchronization preamble B indicating that this subframe is situated at the head of the sector, and the data of channel CH1. The first subframe in the second and subsequent frames #2-#192 has a synchronization preamble M indicating that this subframe is situated at the head of each of the second and subsequent frames, and the data of channel CH1. Further, the second subframe in each of the frames #1-#192 has a synchronization preamble W indicating that this subframe is a second subframe in each frame, and the data of channel CH2.

As shown in Fig 7C, the channels CH1, CH2 each include audio data of up to 24 bits, 1-bit data V called a validity flag, 1-bit data U called a channel status, 1-bit data C called user data, and 1-bit parity data P.

The user data C is used to transfer the address data indicating the positions of individual subframes by distributing the address data over 192 frames #1-#192, one bit in each frame . The CD decoder/communication encoder circuit 12 transfers the stereo audio data generated as a result of decoding the detected data D1 by allocating them to the channels CH1, CH2 of up to 24 bits and identifying the positions of these stereo audio data by the user data C of 192 frames #1-#192.

A validity flag V is used to identify whether the stereo audio data is normal or abnormal.

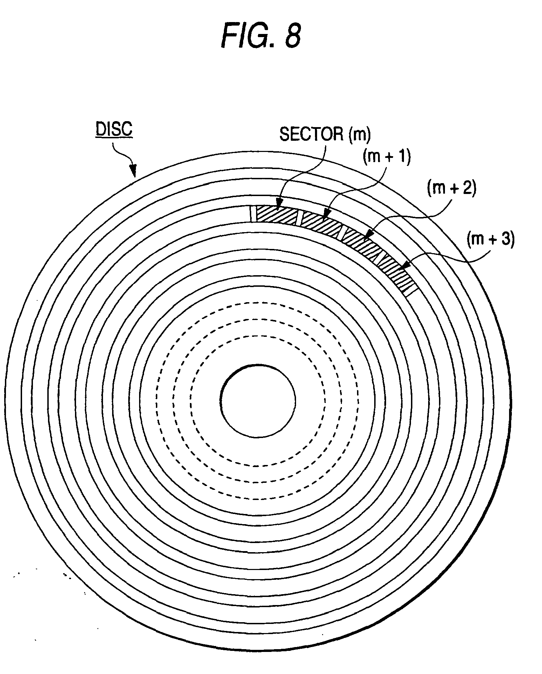

When the data D2 of each piece of music encoded in a predetermined interface format is transferred to the recorder 5, the recorder 5 generates data D4 compatible with the CD format shown in Fig. 3 by decoding the data D3 by the decoder circuit 18. Then, the data D4 is encoded by the read/write signal processing circuit 25 into the format for writing into hard disc. The data is written into the sectors m, m+1, m+3, m+4, ... on the hard disc DISC, as shown in Fig. 8.

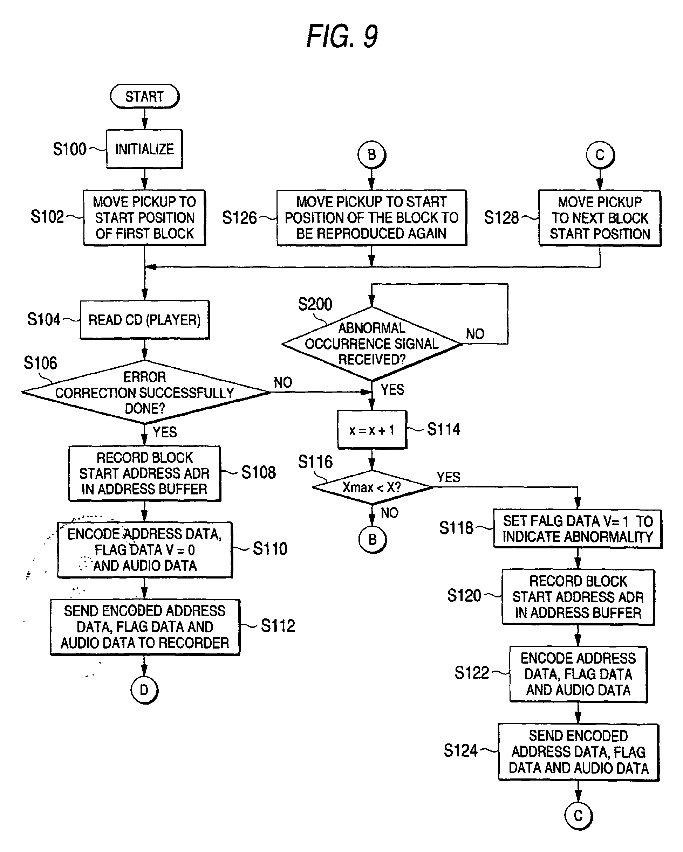

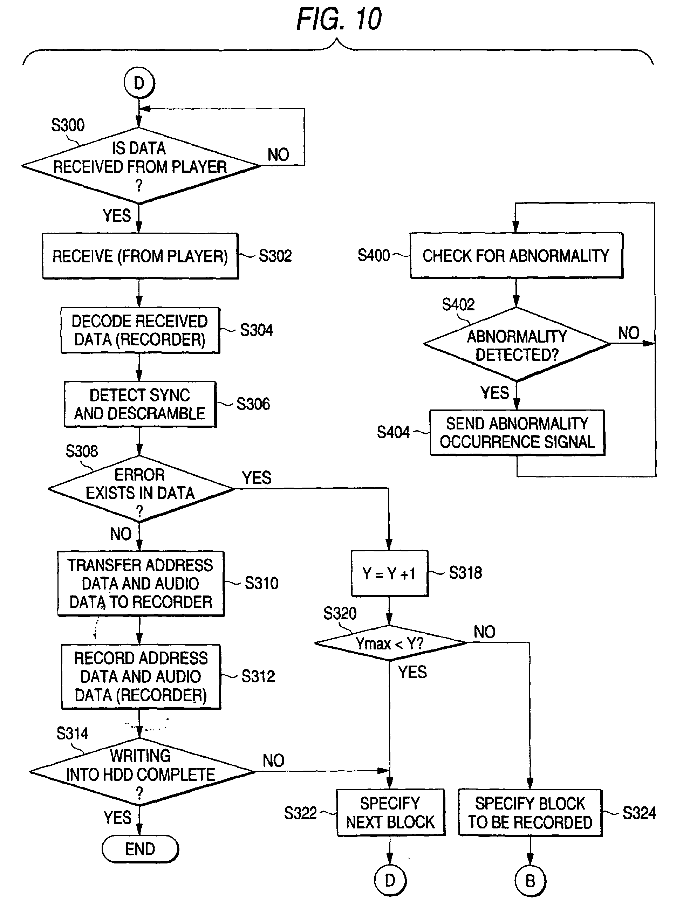

Next, the operation for copying the audio data reproduced by the player 2 into the hard disc drive HDD of the recorder 5 will be explained by referring to the flow charts of Figs. 9 and 10. Fig. 9 shows the operation carried out mainly by the player 2 and Fig. 10 the operation performed mainly by the recorder 5.

In Fig. 9, when the user loads a music CD into the player 2, the initialize processing is performed in step S100 and then the pickup 10 reads the management data from the TOC on the music CD, which is then decoded by the CD decoder/communication encoder circuit 12. The address data contained in the decoded management data is stored in an address buffer (not shown) in the control circuit 13. Then the player enters a standby state temporarily.

In this temporary standby state, when the user manipulates the operation unit 15 to request the start of the copying, steps S102-S128 and an anomaly detection step S200 are performed in parallel.

Let us first explain about the operation triggered when the anomaly detection step S200 detects an abnormality. The control circuit 17 in the recorder 5 also performs anomaly detection processing at steps S400 and S402. The step S400 checks the detection signals Sv, Sb from the voltage sensor 23 and the vibration sensor 30 to see if there is any anomaly. When the step S402 decides that it has detected a large vibration such as impact or a supply voltage fluctuation ("Yes" branch), the next step S404 sends the control data Dc representing the occurrence of abnormality from the control circuit 17 to the control circuit 13.

The control circuit 17 puts in the control data Dc the record address ADR where the block of data corresponding to the anomaly occurrence time is recorded, and transfers the control data Dc to the control circuit 13 to request it to read again the data recorded in the record address ADR on the disc CD and retransmit it.

Upon receiving the control data Dc representing the occurrence of anomaly at step S200, the control circuit 13 in the player 2 is interrupted and forcibly moved to step S114 where it causes a program counter in the control circuit 13 to increment the counter value X by one.

At step S116 a check is made to see if the counter value X is larger than a predetermined threshold value Xmax. If Xmax ≥X ("No" branch), the processing moves to step S126. If Xmax < X ("Yes" branch), the processing moves to step S128.

At step S126, the pickup 10 is moved to the start position of the block to be reproduced again, i.e., where the block corresponding to the anomaly occurrence time begins . At the next step S104 one block (98 frames) of data D1 is read from the music CD, and then the CD decoder/communication encoder circuit 12 performs the decoding and bit error correction operations on the data thus read in a manner conforming to the CD format.

That is, when an anomaly is detected at step S200, the decision is made at the above steps S114 and S116. When Xmax ≥ X ("No" branch), the processing moves to step S126 and then to step S104 to read again the block corresponding to the anomaly occurrence time.

Next, the operation performed when no anomaly occurrence signal is found at step S200 will be explained. In this case, at step S102 the pickup 10 is moved to the start position of the block to be reproduced and at step S104 the data is read from the disc CD.

Next, at step S106 the bit error correction operation is performed on the data D1 thus read out and a check is made as to whether the bit error correction has been successfully done.

When appropriate data is obtained ("Yes" branch), the next step S108 extracts from the subcode in the Q-channel of the decoded data the address data ADR representing the start position of the block and stores it in the memory buffer in the control circuit 13. Further, at step S110 the CD decoder/communication encoder circuit 12 adds the address data ADR and flag data V (=0) to the audio data and encodes the audio data in conformity to the interface format to generate the transmission data D2 for each sector shown in Fig.7. Then, at step S112 the transmission data D2 is sent to the recorder 5, which will perform the steps S300-S324 shown in Fig. 10.

In step S106 when appropriate data cannot be obtained even by the error correction ("No" branch), the processing moves to step S114 where it causes the program counter (not shown) in the control circuit 13 to increment the counter value X by one. Then, at step S116 the control circuit 13 checks whether the counter value X is larger than a predetermined threshold value Xmax.

When Xmax ≥ X ("No" branch), it is decided that the number of times the appropriate data has failed to be obtained (counter value X) while the music being copied is played is within the range of the maximum number of retries Xmax. Then the processing proceeds to step S126 where the pickup 10 is moved to the start position of the block to be reproduced again (the start position of the block that could not be error-corrected). This is followed by the repetition of step S104 and subsequent steps.

When at step S116 Xmax < X ("Yes" branch), it is decided that the number of times the appropriate data has failed to be obtained (counter value X) while the music is played exceeds the maximum number of retries Xmax. Then, at step S118 the flag data V is set to 1 and at step S120 the address data ADR is stored in the address buffer. Then, at step S122 the address data ADR, flag data V (=1) and audio data are encoded and at step S124 the transmission data D2 thus encoded is transmitted to the recorder 5, after which the processing moves to step S128.

That is, when the player 2 fails to read the music CD or receives a signal indicating the occurrence of anomaly from the recorder 5, it makes a decision of step S114 and S116. When Xmax ≥ X ("No" branch), the player 2 performs the processing from step S126 on down to reproduce again the block that failed to be read out or the one corresponding to the anomaly occurrence time. Then, when the number of repetitive playbacks (i.e., the number of retries) X exceeds the predetermined threshold value Xmax, the player 2 performs the processing from step S116 to step S120-S124, thereby sending the transmission data D2 with the flag data V set to 1 to the recorder 5. After this, the processing moves to step S128 where it resumes playback from the next block.

The counter value X in the program counter is reset each time the processing moves to the step S128 to change the block to be copied.

When the transmission data D2 is sent from the player 2 to the recorder 5, it is recorded by the hard disc drive HDD according to the processing shown in Fig. 10.

First, at step S300 of Fig. 10, when the control circuit 17 decides that the data D2 is transferred from the player 2, it receives the data D2 at step S302. At step S304, the decoder circuit 18 decodes one sector of data received and at step S306 performs a synchronization detection and descrambling on the data to generate data conforming to the CD format.

Next, at step S308 the control circuit 17 checks the flag data V added to the data D4. When the flag data V is 0 indicating that the data is normal ("No" branch), the control circuit 17 at step S310 transfers the data D4 containing the address data ADR and audio data to the hard disc drive HDD. Next, at step S312, the read/write signal processing circuit 25 encodes the address data ADR and the audio data in conformance to the format of the hard disc DISC and supplies the encoded data Ds to the read/write head 28 which in turn records (writes) the data Ds into a sector of the hard disc DISC.

Then, at step S314 the control circuit 27 checks if all the data Ds of the music to be copied has been written into the hard disc DISC. If it is found that all the data has not yet written into the disc, the control circuit 17 at step S322 requests the control circuit 13 to convert the next block of data D1 into data D2 and transfer it. That is, when one sector of data is written into the hard disc drive HDD, the control circuit 17 causes the control circuit 13 to perform the processing beginning with step S104 of Fig. 9 to send the next sector of data D2 from the player 2.

When at step S308, however, the flag data V (=1) indicating that the data is abnormal is found ("Yes" branch), the control circuit 17 moves to step S318 where it causes its program counter (not shown) to increment the counter value Y by one.

Next at step S320, the control circuit 17 checks whether the counter value Y is larger than the predetermined threshold value Ymax. If Ymax ≥ Y ("No" branch), the control circuit 17 decides that the number of times the proper data has failed to be obtained (counter value Y) is within the allowable retry number, and moves to step S324 where it requests the player 2 to perform the processing from the step S126 of Fig. 9.

When Ymax < Y ("Yes" branch), the control circuit 17 decides that the number of times the proper data has failed to be obtained (counter value Y) exceeds the allowable retry number, and moves to steps S322 where it requests the player 2 to perform the processing from the steps S128 of Fig. 9.

That is, when an error occurs in the data D4 to be recorded into the hard disc drive HDD, if the number of retries Y is within the range of the threshold value Ymax, the control circuit 17 issues an instruction to request the player 2 to perform playback (reading) until the data D4 to be recorded is obtained (step S324). When the number of retries Y exceeds the threshold value Ymax, the control circuit 17 informs the block to be recorded next to the player 2 (step S322). That is, when the retry number Y exceeds the threshold value Ymax, the control circuit 17 avoids a further retry..

As described above, when an anomaly is detected at steps S400-S402, too, the control circuit 17 at step S404 instructs the control circuit 13 of the player 2 to read again and retransmit the block in which the anomaly occurred. Upon receiving this instruction, the player 2 (see step S200 in Fig. 9) performs rereading and retransmission operations so that proper data can be written into the hard disc drive HDD.

In this way the steps S300-S324 and steps S400-S404 are repeated. When the steps S320 and S402 decide that no anomaly has occurred, the data D2 in the sectors of the music to be copied are successively received. When on the other hand the steps S320 and S402 decide that an anomaly has occurred, the data D2 in the same sector is received and then the sectors of data in the music to be copied are successively recorded into the hard disc DISC. Then, after all the data Ds of the music to be copied have been written into the hard disc DISC, this is confirmed by the step S314 and the copy processing is completed.

According to this embodiment, as shown in Fig. 3, when an abnormal condition (error) occurs at a point in time te during the copying operation, as when the hard disc drive HDD is vibrated by external forces or the supply voltage fluctuates, the recorder 5 instructs the player 2 to retry the reading of the music CD beginning with the block in which the error occurred. This process ensures that proper data is copied to the hard disc DISC.

Further, when the player 2 failed to read data properly or when the data D2 fails to be transferred to the recorder 5 due to noise interference during data transfer, the music CD is read again from the block where the anomaly occurred. Therefore, appropriate data can be copied into the hard disc DISC.

Further, when an error occurs in a block B3 as shown in Fig. 3, the reading operation simply returns from the error occurring point te to the start position of the block B3 where the error occurred and performs the copy operation again, thus greatly reducing the copying time.

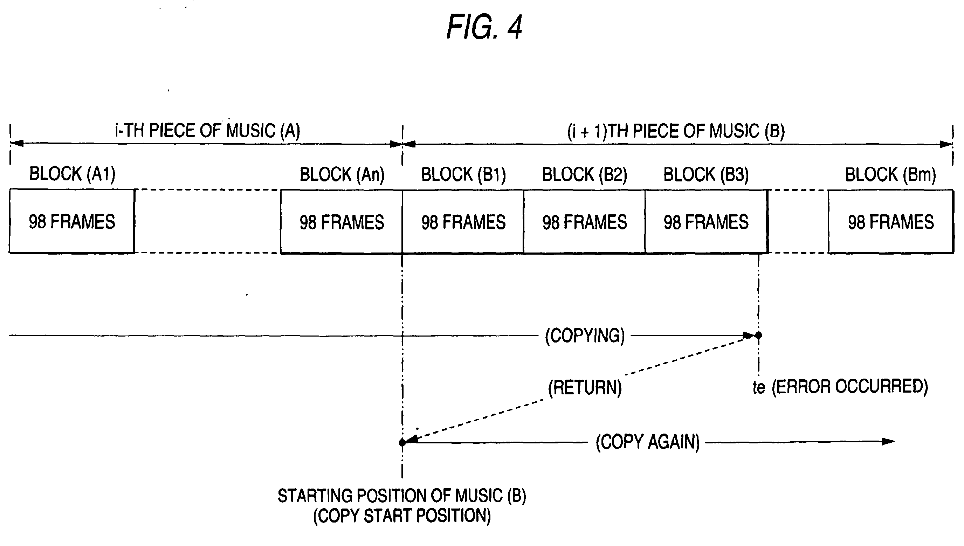

That is, in the conventional operation of Fig. 10, the copy operation is resumed after returning from the error occurring point te to the start position a plurality of blocks before, as detailed in Fig. 4, and therefore the copying takes long. In this embodiment, however, as shown in Fig. 3, simply returning from the error occurring point te to the start position of the block where the error occurred allows the copy operation to be resumed, thus greatly reducing the copying time. Particularly when long music, such as classic music, is copied and an abnormality (error) occurs just before the copying operation is completed, the conventional method takes extremely long in completing the copying operation. This embodiment, however, enables the copy operation to be completed in a short time, providing the user with an excellent operability.

In this embodiment we have explained about a case where a music CD is copied into a hard disc DISC. The present invention is not limited to this application. With this invention, CDs other than music CDs (for example, CD-ROM) and other digital information recording media such as MD, DAT, MO and DVD can be played and recorded into a hard disc DISC in a short time. Although in the above explanation, a hard disc drive HDD is used as a target medium into which the media data is copied, data can also be copied into other digital information recording media in a short length of time.

We have explained an embodiment of a car-mounted audio system, this invention is not limited to this application but can widely be applied to signal processing systems having a function of copying information. The invention can be applied, for example, to a navigation system which comprises a player for playing an information recording medium such as CD and DVD recorded with map data, and a recorder for recording the map data reproduced by the player into an information recording medium such as a hard disc DISC, and which performs navigation based on the map data recorded (copied) into the recorder.

We have explained about a case where the data reproduced from an information recording medium by the player is written into the recorder. The present invention is not limited to the player or reproducing device, but can also be applied to a signal processing system that has a source for supplying digital data to a storage device . For example, the invention can be applied to a signal processing system which has a receiving device for receiving data transmitted by a digital television broadcast or over a digital communication network and uses the receiving device as a source for supplying data to a storage device where the data is stored.

Further, to obtain address data for managing the audio data, this embodiment handles 98 frames of data, the shortest data length, as one block and resumes the copy operation from the block of data in which an anomaly occurred, thereby reducing the copying time. This invention, however, is not limited to this data management scheme. The invention is essentially applicable to the copying of a so-called data file which is structured based on a shortest data length unit in which significant data, including audio data, can be managed by addresses.

The shortest data length unit in which significant data can be managed by addresses is not limited to the ones called frame, block or sector. The signal processing system that handles a type of data called packet is also included in this invention.

While this embodiment has been described to have a vibration sensor and a voltage sensor, the invention is not limited to this configuration but also includes a configuration having a sensor capable of detecting a physical phenomenon that has caused abnormality during the copying process.

Further, in this embodiment, when an abnormal condition occurs, the recorder instructs the player to repeat the playback beginning with the block of data corresponding to the occurrence of the anomaly and then records again the same re-read data. The invention is not limited to this processing.

As a variation of this embodiment, the following processing may be executed. That is, in the event of an abnormality, the recorder instructs the player to repeat the playback beginning with at least one block before the data block corresponding to the occurrence of anomaly and, after the second-time playback is done, the recorder records at least the same data block that corresponds to the occurrence of the anomaly.

For example, when an error occurs in a block (B3) in Fig. 3, the recorder 5 instructs, by address specification, the player 2 to perform another playback starting from the block (B2) and then records again the re-read block (B2) and block (B3) into the hard disc DISC of the recorder 5. Of the blocks (B2) and (B3) that were reproduced second time, only the data of the block (B3) may be recorded again into the hard disc DISC of the recorder 5.

As described above, when data in a data file is transferred from a source such as a player or reproducing device to a recorder and is being recorded in the recorder, if an abnormal condition occurs in the source or the recorder, the data in the data file beginning with the data block that was being recorded at time of anomaly or the data beginning with one block before the failed data block is retransmitted to the recorder and the recording is resumed from at least that data block among those retransmitted to the recorder in which the anomaly occurred. This process eliminates the need for re-recording all the data in the data file, thereby reducing the time it takes for the data file to be recorded completely.

Further, because a voltage sensor for detecting an abnormal condition in the supply voltage supplied to the recorder and a vibration sensor for detecting vibrations of the recorder are provided and these detection means are used to detect the occurrence of an anomaly, it is possible to reliably record the data in the recorder even when such voltage fluctuations or vibrations as will hinder proper recording of data occur.

## Claims

1. A signal processing system in which a data file (A,B) having a plurality of data blocks (A1-An, B1-Bm) each of a predetermined and equal data length is transferred from a source (2,3,4) to a recorder (5) and recorded in said recorder, said signal processing system comprising:
an abnormality detection means (23,30) arranged to detect, in use, an abnormality while the data file is recorded and to output an abnormality detection signal; and
a control means (17) disposed on said recorder and arranged, in use, when the abnormality detection signal is output from the abnormality detection means, to instruct the source to retransfer a data block in the data file which was being read at the time of abnormality detection or a data block which is a predetermined amount before the data block in the data file associated with the abnormality detection, and at the same time instruct the recorder to resume the recording, beginning with at least the data block among those retransmitted to the recorder,
**characterised by**:
said abnormality being in the recorder but not in the source for the recorder; and
said abnormality detection means being disposed on said recorder.

2. A signal processing system according to claim 1, the system further comprising:
a data adding means (12) provided in the source (2,3,4) which adds, in use, address information (ADR) to each data block (A1-An, B1-Bm) and transfer the data blocks to said recorder (5), and
an address determination means (18) which determines, in use, according to the address information, when the abnormality detection signal is output from said abnormality detection means, an address of the data block in the data file which was being read at the time of the abnormality detection;
wherein the control means (17) is arranged, in use, to instruct said source to retransfer data beginning with the address determined by said address determination means or an address a predetermined amount before the address determined by said address determination means, and at the same time instruct the recorder to resume the recording, beginning with at least the data block among those retransmitted to the recorder in which the abnormality occurred.

3. A signal processing system according to claim 1 or claim 2, wherein the data adding means (12) provided in the source adds flag information (V) indicating whether the data block (A1-An,B1-Bm) is normal or abnormal, in use, to the data block and then transfers the data blocks to the recorder, and wherein the address determination means (18) decides, in use, whether the data block is normal or abnormal according to the flag information, and when the data block is decided to be abnormal, detects an address of the abnormal data block according to the address information (ADR).

4. The signal processing system according to any one of claim 1 to 3, wherein
said abnormality detection means is a voltage sensor (23) that detects, in use, an abnormality in a supply voltage supplied to said recorder (15).

5. The signal processing system according to any one of claim 1 to 3, wherein
said abnormality detection means is a vibration sensor (30) that detects, in use, vibrations of said recorder (5).

6. The signal processing system according to any one of claim 1 to 5, wherein
said source (2,3,4) is a player which plays, in use, an information recording medium (CD) recorded with a data file (A,B) made up of a plurality of data blocks (A1-An, B1-Bm) of the predetermined data length.

## Patentansprüche

1. Signalverarbeitungssystem, in dem eine Datendatei (A, B) mit einer Vielzahl von Datenblöcken (A1-An, B1-Bm), jeder von einer vorgegebenen und gleichen Datenlänge, von einer Quelle (2, 3, 4) zu einem Aufzeichnungsgerät (5) gesendet wird und in dem Aufzeichnungsgerät aufgezeichnet wird, das Signalverarbeitungssystem umfasst:
eine Anormalitätserkennungseinrichtung (23, 30), eingerichtet, um in Verwendung eine Anormalität zu erkennen, während die Datendatei aufgezeichnet wird, und um ein Anormalitätserkennungssignal auszugeben und
eine Steuereinrichtung (17), auf dem Aufzeichnungsgerät angeordnet, um in Verwendung, wenn von der Anormalitätserkennungseinrichtung das Anormalitätserkennungssignal ausgegeben wird, die Quelle anzuweisen, einen Datenblock in der Datendatei, der zum Zeitpunkt der Anormalitätserkennung ausgelesen wurde, oder einen Datenblock, der eine vorgegebene Menge vor dem Datenblock, der mit der Anormalitätserkennung in der Datendatei verknüpft ist, ist, erneut zu senden und gleichzeitig das Aufzeichnungsgerät anzuweisen, das Aufzeichnen beginnend mit wenigstens dem Datenblock unter denen, die erneut zu dem Aufzeichnungsgerät gesendet werden, in dem die Anormalität auftrat, fortzusetzen,
**dadurch gekennzeichnet, dass**
die Anormalität in dem Aufzeichnungsgerät, jedoch nicht in der Quelle für das Aufzeichnungsgerät ist und
die Anormalitätserkennungseinrichtung auf dem Aufzeichnungsgerät angeordnet ist.

2. Signalverarbeitungssystem nach Anspruch 1, wobei das System des Weiteren umfasst:
eine Datenaddiereinrichtung (12), in der Quelle (2, 3, 4) bereitgestellt, die in Verwendung Adressinformation (ADR) zu jedem Datenblock (A1-An, B1-Bm) hinzufügt und die Datenblöcke zu dem Aufzeichnungsgerät (5) sendet, und
eine Adressenfeststellungseinrichtung (18), die in Verwendung entsprechend der Adresseninformation, wenn von der Anormalitätserkennungseinrichtung das Anormalitätserkennungssignal ausgegeben wird, eine Adresse des Datenblocks in der Datendatei, der zur Zeit der Anormalitätserkennung in der Datendatei gelesen worden ist, feststellt,
wobei die Steuereinrichtung (17) eingerichtet ist, um in Verwendung die Quelle anzuweisen, die Daten, beginnend mit der durch die Adressenfeststellungseinrichtung festgestellten Adresse oder mit einer Adresse einer vorgegebenen Menge vor der durch die Adressenfeststellungseinrichtung festgestellten Adresse, erneut zu senden und gleichzeitig das Aufzeichnungsgerät anzuweisen, das Aufzeichnen, beginnend mit wenigstens dem Datenblock unter denen, die erneut zu dem Aufzeichnungsgerät gesendet werden, in dem die Anormalität auftrat, fortzusetzen.

3. Signalverarbeitungssystem nach Anspruch 1 oder 2, wobei die in der Quelle bereitgestellte Addiereinrichtung (12) in Verwendung Flag-Information (V), die anzeigt, ob der Datenblock (A1-An, B1-Bm) normal oder anormal ist, zu dem Datenblock hinzufügt und anschließend die Datenblöcke zu dem Aufzeichnungsgerät sendet und wobei die Adressenfeststellungseinrichtung (18) in Verwendung entsprechend der Flag-Information entscheidet, ob der Datenblock normal oder anormal ist, und, wenn der Datenblock als anormal festgestellt ist, eine Adresse des anormalen Datenblocks entsprechend der Adressinformation (ADR) erkennt.

4. Signalverarbeitungssystem nach einem der Ansprüche 1 bis 3, wobei die Anormalitätserkennungseinrichtung ein Spannungssensor (23) ist, der in Verwendung eine Anormalität der in das Aufzeichnungsgerät (15) eingespeisten Versorgungsspannung erkennt.

5. Signalverarbeitungssystem nach einem der Ansprüche 1 bis 3, wobei die Anormalitätserkennungseinrichtung ein Schwingungssensor (30) ist, der in Verwendung Schwingungen des Aufzeichnungsgerätes (5) erkennt.

6. Signalverarbeitungssystem nach einem der Ansprüche 1 bis 5, wobei die Quelle (2, 3, 4) ein Wiedergabegerät ist, das in Verwendung ein Informationsaufzeichnungsmedium (CD), auf dem eine Datendatei (A, B), die aus einer Vielzahl von Datenblöcken (A1-An, B1-Bm) von vorgegebener Datenlänge besteht, abspielt.

## Revendications

1. Système de traitement de signal dans lequel un fichier de données (A, B) qui comporte une pluralité de blocs de données (A1-An, B1-Bm) dont chacun est d'une longueur de données prédéterminée et égale est transféré depuis une source (2, 3, 4) jusqu'à un enregistreur (5) et est enregistré dans ledit enregistreur, ledit système de traitement de signal comprenant :
un moyen de détection d'anomalie (23, 30) qui est agencé pour détecter, en utilisation, une anomalie tandis que le fichier de données est enregistré et pour émettre en sortie un signal de détection d'anomalie ; et
un moyen de commande (17) qui est disposé sur ledit enregistreur et qui est agencé, en utilisation, lorsque le signal de détection d'anomalie est émis en sortie depuis le moyen de détection d'anomalie, pour demander en instruction à la source de transférer un bloc de données dans le fichier de données qui a été lu à l'instant d'une détection d'anomalie ou un bloc de données qui est une quantité prédéterminée avant le bloc de données dans le fichier de données associé à la détection d'anomalie et dans le même temps, pour demander en instruction à l'enregistreur de reprendre l'enregistrement en commençant par au moins le bloc de données parmi ceux retransmis sur l'enregistreur,
**caractérise par :**
**le fait que** ladite anomalie est dans l'enregistreur mais pas dans la source pour l'enregistreur ; et
ledit moyen de détection d'anomalie est disposé sur ledit enregistreur.

2. Système de traitement de signal selon la revendication 1, le système comprenant en outre :
un moyen d'addition de données (12) qui est prévu dans la source (2, 3, 4), lequel additionne, en utilisation, une information d'adresse (ADR) à chaque bloc de données (A1-An, B1-Bm) et transfère les blocs de données sur ledit enregistreur (5) ; et
un moyen de détermination d'adresse (18) qui détermine, en utilisation, conformément à l'information d'adresse, lorsque le signal de détection d'anomalie est émis en sortie depuis ledit moyen de détection d'anomalie, une adresse du bloc de données dans le fichier de données qui a été lu à l'instant de la détection d'anomalie,
dans lequel le moyen de commande (17) est agencé, en utilisation, pour demander en instruction à ladite source de retransférer des données en commençant par l'adresse qui est déterminée par ledit moyen de détermination d'adresse ou par une adresse une quantité prédéterminée avant l'adresse qui est déterminée par ledit moyen de détermination d'adresse et dans le même temps, pour demander en instruction à l'enregistreur de reprendre l'enregistrement, en commençant par au moins le bloc de données parmi ceux retransmis sur l'enregistreur où l'anomalie s'est produite.

3. Système de traitement de signal selon la revendication 1 ou 2, dans lequel le moyen d'addition de données (12) qui est prévu dans la source additionne une information d'indicateur (V) qui indique si le bloc de données (A1-An, B1-Bm) est normal ou anormal, en utilisation, puis transfère les blocs de données sur l'enregistreur et dans lequel le moyen de détermination d'adresse (18) décide, en utilisation, si le bloc de données est normal ou anormal conformément à l'information d'indicateur et lorsque le bloc de données est décidé comme étant anormal, détecte une adresse du bloc de données anormal conformément à l'information d'adresse (ADR).

4. Système de traitement de signal selon l'une quelconque des revendications 1 à 3, dans lequel :
ledit moyen de détection d'anomalie est un capteur de tension (23) qui détecte, en utilisation, une anomalie au niveau d'une tension d'alimentation qui est appliquée sur ledit enregistreur (5).

5. Système de traitement de signal selon l'une quelconque des revendications 1 à 3, dans lequel :
ledit moyen de détection d'anomalie est un capteur de vibration (30) qui détecte, en utilisation, des vibrations dudit enregistreur (5).

6. Système de traitement de signal selon l'une quelconque des revendications 1 à 5, dans lequel ladite source (2, 3, 4) est un lecteur qui lit, en utilisation, un support d'enregistrement d'information (CD) sur lequel est enregistré un fichier de données (A, B) qui est constitué par une pluralité de blocs de données (A1-An, B1-Bm) de la longueur de données prédéterminée.
